(19) Europäisches Patentamt
European Patent Office
Office européen des brevets

(11) **EP 2 527 624 B1**

(12) **EUROPEAN PATENT SPECIFICATION**

(45) Date of publication and mention
of the grant of the patent:
**08.07.2015  Bulletin 2015/28**

(51) Int Cl.:
***F02D 19/10*** *(2006.01)*      ***F02D 19/02*** *(2006.01)*

(21) Application number: **12169101.8**

(22) Date of filing: **23.05.2012**

(54) **Method for controlling fuel injection in a multifuel internal-combustion engine in the event of pressure jumps**

Verfahren zur Steuerung der Kraftstoffeinspritzung in einem Mehfachbrennstoff-Verbrennungsmotor im Fall von Drucksprüngen

Procédé pour commander une injection de carburant dans un moteur à combustion interne polycarburant, dans le cas de sautes de pression

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.05.2011  IT BO20110292**

(43) Date of publication of application:
**28.11.2012  Bulletin 2012/48**

(73) Proprietor: **Magneti Marelli S.p.A.**
**Corbetta (MI) (IT)**

(72) Inventors:
• **Sgatti, Stefano**
**40026 IMOLA (IT)**
• **Sensi, Fabio**
**40033 CASALECCHIO DI RENO (IT)**

• **Garagnani, Nicola**
**40056 CRESPELLANO (IT)**
• **Zanotti, Massimo**
**40040 VADO (IT)**
• **Atzori, Roberto**
**40050 CASTELLO DI SERRAVALLE (IT)**
• **Cavanna, Filippo**
**40139 BOLOGNA (IT)**

(74) Representative: **Bergadano, Mirko et al**
**Studio Torta S.p.A.**
**Via Viotti, 9**
**10121 Torino (IT)**

(56) References cited:
**WO-A1-2010/006356      JP-A- 2002 038 986**
**JP-A- 2008 019 804      US-A1- 2009 070 008**

**Description**

TECHNICAL SECTOR

The present invention relates to a method for controlling fuel injection in a multifuel internal-combustion engine.

The present invention finds advantageous application in a two-fuel internal-combustion engine, to which the present description will make explicit reference, without this applying any loss of generality.

PRIOR ART

A two-fuel internal-combustion engine is able to function indifferently with two different types of fuel (typically petrol and LPG or petrol and methane). A modern two-fuel internal-combustion engine uses two different injector assemblies, each of which is able to inject a respective type of fuel.

In the case of an after-market adaptation of the internal-combustion engine, two separate electronic control units are always used, each of which controls a respective injector assembly independently of the other; however, said solution proves costly in so far as it requires installation of two separate and independent electronic control units.

In the case of an internal-combustion engine that has been designed to be of a two-fuel type, instead of using two separate and independent electronic control units, a single common electronic control unit is normally used, which can drive electrically both of the injector assemblies by means of a switching device that receives at input the electrical driving signals supplied by the common electronic control unit and supplies at output the electrical driving signals to one injector assembly at a time. For example, the switching device can comprise a plurality of electromechanical relays, each of which is designed to connect electrically and alternatively two injectors to one and the same output of the common electronic control unit.

In a two-fuel internal-combustion engine, one of the main targets is to prevent irregular operations during which in the cylinders there is supplied too little fuel (creating an undesirable drop in torque) or else too much fuel (creating a peak in torque that is equally undesirable). One of the situations where irregular operation is more likely to occur is the step of transition from one fuel to the other. Irregular operation may also arise when the engine is supplied with a gaseous fuel and there occurs a very fast transient in which the engine passes rapidly from a situation of zero torque to a situation of maximum torque, or vice versa. In said passages, the pressure regulator for the gaseous fuel may respond with a certain delay to the variation of the flowrate of the gaseous fuel on account of its mechanical inertias and may hence supply to the injectors a flowrate of gaseous fuel that is too low (with a consequent even considerable decrease in the pressure of the gaseous fuel as compared to the nominal value) or else too high (with a consequent even considerable increase in the pressure of the gaseous fuel as compared to the nominal value). Said variations of the pressure of the gaseous fuel as compared to the nominal value easily bring about errors in injection of the gaseous fuel (i.e., deviations between the amount of gaseous fuel actually injected and the optimal amount of gaseous fuel).

The patent application No. JP2002038986A, the patent application No. WO2010/006356 A1 and the patent application No. US2009070008 describe respective methods for controlling fuel injection in a multifuel internal-combustion engine.

DESCRIPTION OF THE INVENTION

The aim of the present invention is to provide a method for controlling fuel injection in a multifuel internal-combustion engine, said control method being free from the drawbacks described above and, in particular, being easy and economically advantageous to implement.

According to the present invention a method for controlling fuel injection in a multifuel internal-combustion engine is provided according to what is claimed in the annexed claims.

BRIEF DESCRIPTION OF THE DRAWINGS

The present invention will now be described with reference to the annexed drawings, which illustrate a non-limiting example of embodiment thereof and in which:

- Figure 1 is a schematic view of a two-fuel internal-combustion engine provided with a control unit that implements the method for controlling injection of fuel forming the subject of the present invention;
- Figure 2 is a schematic view of a single cylinder of the internal-combustion engine of Figure 1;
- Figure 3 is a schematic view of a system for supply of a gaseous fuel of the internal-combustion engine of Figure 1;
- Figure 4 is a graph that illustrates a temporal succession of steps for implementing fuel switching in the internal-combustion engine of Figure 1;
- Figure 5 is a graph that illustrates the succession of injections and ignitions in the cylinders of the internal-combustion engine of Figure 1 during a fuel switch; and
- Figures 6-8 are graphs that illustrate the evolution of a pressure of a gaseous fuel in a common channel in three different operating conditions.

PREFERRED EMBODIMENTS OF THE INVENTION

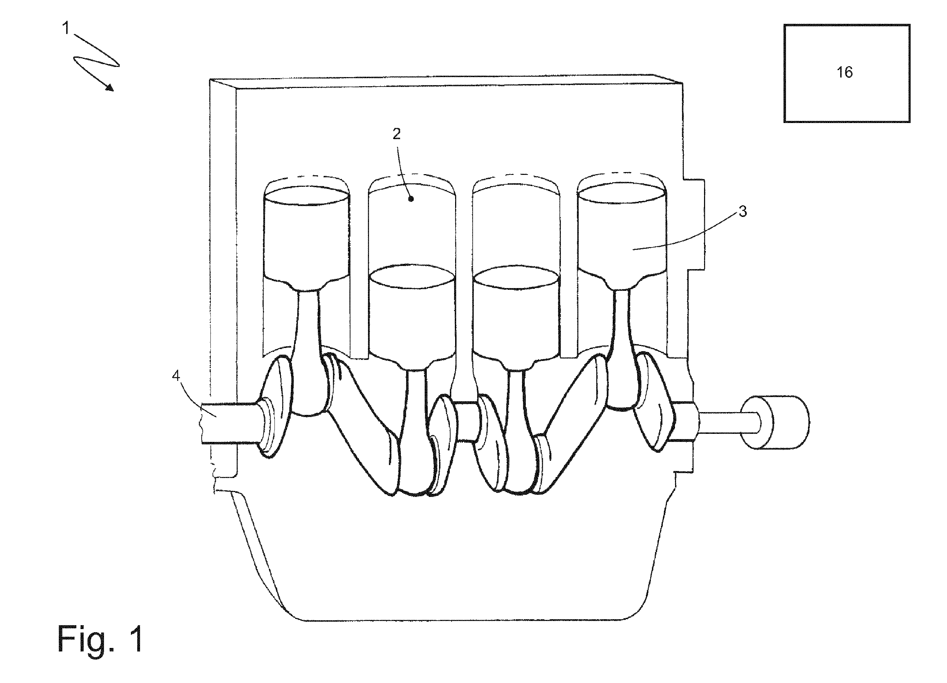

In Figure 1, designated as a whole by the reference number 1 is a two-fuel internal-combustion engine, i.e., one that can be supplied with two different fuels and in particular a liquid fuel (typically petrol) and a gaseous fuel (for example, LPG or else methane).

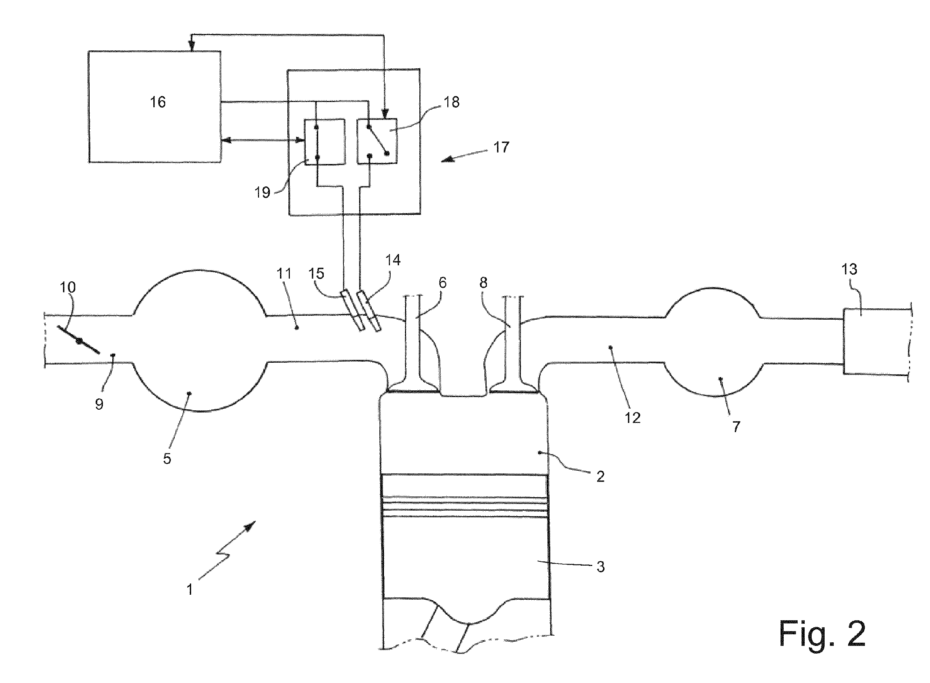

The engine 1 comprises four cylinders 2 set in line; each cylinder 2 houses a respective piston 3 mechanically connected by means of a connecting rod to an engine shaft 4 for transmitting to the engine shaft 4 itself the force generated by the combustion within the cylinder 2. According to what is illustrated in Figure 2, each cylinder 2 is connected to an intake manifold 5 via two intake valves 6 (only one of which is illustrated in Figure 2) and to an exhaust manifold 7 via two exhaust valves 8 (only one of which is illustrated in Figure 2).

The intake manifold 5 receives fresh air (i.e., air coming from the external environment) through a supply duct 9 regulated by a throttle valve 10 and is connected to the cylinders 2 by means of respective intake ducts 11 (only one of which is illustrated in Figure 2), each of which is regulated by the corresponding intake valves 6. Likewise, the exhaust manifold 7 is connected to the cylinders 2 by means of respective exhaust ducts 12 (only one of which is illustrated in Figure 2), each of which is regulated by the corresponding exhaust valves 8. Departing from the exhaust manifold 7 is an outlet pipe 13, which terminates with a silencer for emitting the gases produced by combustion into the atmosphere.

Each cylinder 2 comprises a spark plug (not illustrated), which is set on the roof of the cylinder 2 and is cyclically driven for igniting the mixture at the end of the compression stroke (i.e., approximately at the TDC - top dead centre). According to the embodiment illustrated in Figure 2, two injectors 14 and 15 are provided, each of which is designed to inject a respective type of fuel into each intake pipe 11 and in the proximity of the corresponding intake valves 6; in particular, the injector 14 injects the liquid fuel, and the injector 15 injects the gaseous fuel. According to a different embodiment not illustrated, the injectors 14 and 15 are arranged so as to inject the fuel directly into each cylinder 2.

An electronic control unit (ECU) 16 supervises operation of the internal-combustion engine 1. According to what is illustrated in Figure 2, the control unit 16 is connected to the injectors 14 and 15 by interposition of a switching device 17 that enables selection of which injector assembly 14 and 15 is electrically connected to the control unit 16 and thus receives from the control unit 16 the electrical driving signals. The switching device 17 comprises a set of four relays 18 (only one of which is illustrated in Figure 2), each of which connects a corresponding injector 14 to an output of the control unit 16, and a set of four relays 19 (only one of which is illustrated in Figure 2), each of which connects a corresponding injector 15 to an output of the control unit 16. To supply the liquid fuel into the cylinders 2, the control unit 16 drives the relays 18 and 19 to connect the injectors 14 to its own outputs (and thus disconnect the injectors 15 from its own outputs); likewise, to supply the gaseous fuel into the cylinders 2, the control unit 16 drives the relays 18 and 19 to connect the injectors 15 to its own outputs (and thus disconnect the injectors 14 from its own outputs). The relays 18 and 19 may be of an electromechanical type or else of an electronic type; moreover, one relay 18 and the corresponding relay 19 could be physically integrated in a single common container.

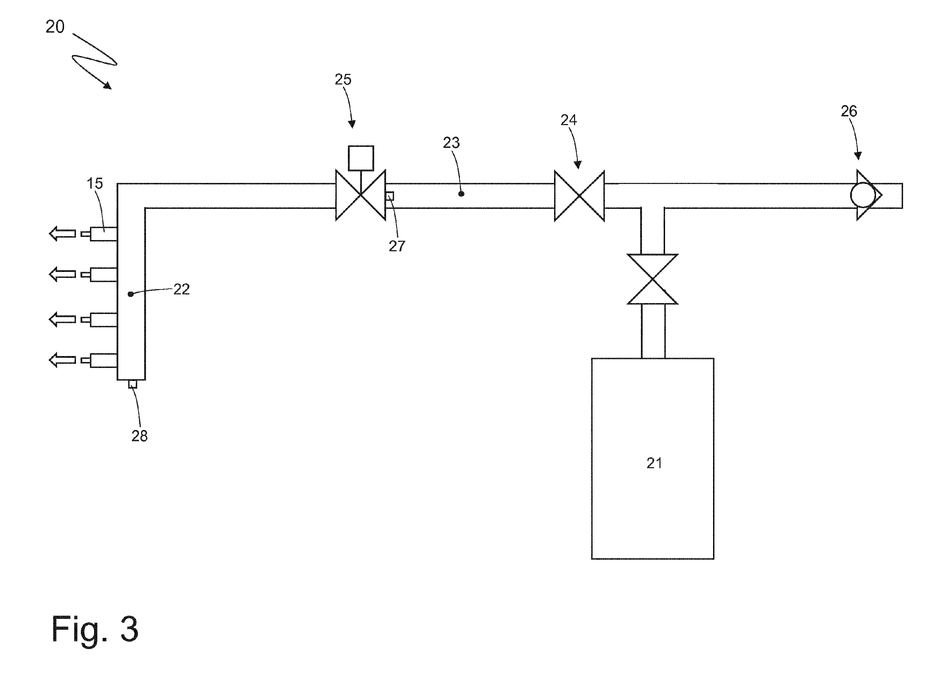

According to what is illustrated in Figure 3, the system 20 for supply of the gaseous fuel comprises a tank 21 constituted by at least one gas cylinder, a common channel 22 directly connected to the injectors 15, and a supply duct 23 that connects the tank 21 to the common channel 22. Set along the supply duct 23 is a shut-off solenoid valve 24 and then a pressure regulator 25 set downstream of the shut-off solenoid valve 24 (when the gaseous fuel is methane, the pressure regulator 25 only performs pressure reduction, whereas, when the gaseous fuel is LPG, the pressure regulator 25 carries out also gasification of the liquefied fuel). A branch of the supply duct 23 opposite to the branch that leads to the common channel 22 terminates with a filling valve 26 that is used for filling the tank 21. Coupled to the pressure regulator 25 is a pressure sensor 27, which detects the pressure of the fuel upstream of the pressure regulator 25, whereas coupled to the common channel 22 is a pressure sensor 28 that detects the pressure $P_{rail}$ of the fuel within the common channel 22 (i.e., immediately upstream of the injectors 15 for the gaseous fuel).

When the control unit 16 receives from the driver the request for carrying out a switching of fuel (i.e., for passing from supply of the liquid fuel to supply of the gaseous fuel or vice versa), the control unit 16 must decide at what instant to carry out switching (i.e., at what instant to drive the switching device 17). The purpose of the control unit 16 is to carry out fuel switching preventing any irregular operation during which too much or too little fuel is supplied to the cylinders 2.

It may be readily appreciated that the ideal moment for carrying out a fuel switch is the cut-off phase, during which nothing is injected (since nothing is injected, it is evident that it is not possible to commit any type of error on the amount of fuel injected). However, the cut-off phase is not (always) so frequent (rather, when travelling on a motorway at an approximately constant speed, it may not occur for several dozens of minutes); hence, it is not possible to set the condition of carrying out fuel switching only during a cut-off phase in so far as it is not acceptable for a command issued by the driver to be executed after an excessive delay (normally the maximum delay allowed between the command issued by the driver and execution of fuel switching is a few seconds).

If it is not possible to carry out fuel switching during a cut-off phase, then the other very favourable condition for carrying out fuel switching is the idling phase, i.e., when the r.p.m. of the engine shaft 4 is constant and equal to the minimum r.p.m. (during idling fuel injections are very short and considerably separate from one another in so far as the torque to be generated has only the purpose of supporting rotation of the engine shaft 4). In fact, in an idling phase the actions to be carried out for engine control are absolutely foreseeable in a precise way and it is simple to identify a time window without any fuel injection in which to carry out fuel switching.

If it is not possible to carry out fuel switching during a cut-off phase or else during an idling phase, then the other quite favourable condition for carrying out fuel switching is a stabilized-r.p.m. phase, i.e., when the speed of rotation of the engine shaft 4 and the engine load (i.e., the torque generated) are approximately constant. In fact, in a stabilized-r.p.m. phase the actions to be carried out for engine control are easily foreseeable in a precise way, and hence it is simpler to prevent errors being committed on the amount of fuel injected.

The worst moment in which to carry out fuel switching is an acceleration transient, during which the speed of rotation of the engine shaft 4 increases (with discontinuities during gear change) and also the engine load presents variations. In fact, during a transient of acceleration the actions to be carried out for engine control are more difficult to foresee precisely, and hence it is more difficult to prevent errors on the amount of fuel injected.

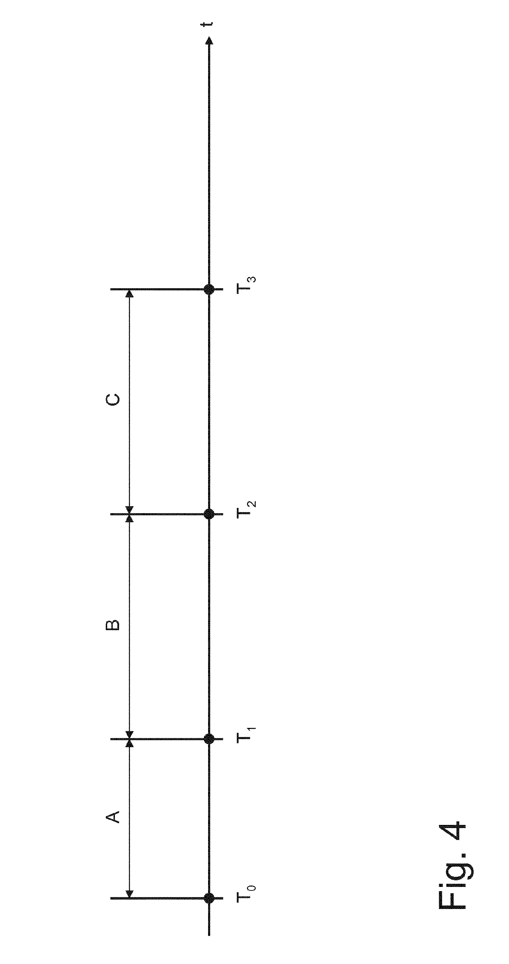

According to what is illustrated in Figure 4, the control unit 16 receives from the driver the request for carrying out a fuel switch at an instant $T_0$ starting from which the control unit 16 must carry out fuel switching. Immediately after the instant $T_0$ the control unit 16 verifies whether there exist the conditions for carrying out fuel switching (for example, it checks that the "new" fuel has not run out, or else that the temperature is sufficient for carrying out gasification of the "new" fuel in the pressure regulator 25).

Once the control unit 16 has verified that there exist the conditions for carrying out fuel switching, then the control unit 16 activates without any further delay supply of the "new" fuel to the corresponding injectors 14 or 15. If the "new" fuel is the gaseous fuel, then the control unit 16 opens the shut-off solenoid valve 24 (which is always closed for reasons of safety when the gaseous fuel is not used). Instead, if the "new" fuel is the liquid fuel, then the control unit 16 switches on a fuel pump, which supplies the pressurized liquid fuel to the injectors 14 (when the liquid fuel is not used, the fuel pump is switched off for energy saving). To allow settling of the transients following upon the actions necessary to enable injection of the "new" fuel (i.e., to allow the "new" fuel to reach its own injectors 14 or 15 at an adequate pressure), after the instant $T_0$ the control unit 16 waits for a time interval A. The duration of the time interval A is normally comprised between 1 and 3 s and can vary, for example, as a function of the time that has elapsed from the last fuel switch for fuel switches to the liquid fuel (the longer the time that has elapsed since the last fuel switch, the longer the duration of the time interval A must be) or else as a function of the pressure of the gaseous fuel within the common channel 22 at the moment of start of fuel switching for fuel switches to gaseous fuel (the lower the pressure of the gaseous fuel within the common channel 22, the longer the duration of the time interval A must be).

Starting from an instant $T_1$ (which is separated from the previous instant $T_0$ by the time interval A), the control unit 16 waits, for a time interval B, for a cut-off phase or else an idling phase to occur for carrying out fuel switching. In other words, starting from the instant $T_1$ and for the time interval B, the control unit 16 carries out fuel switching only if a cut-off phase or else an idling phase occurs. The duration of the time interval B is normally comprised between 2 s and 4 s and may vary, for example, as a function of the driving mode chosen by the driver (the time interval B may be longer in "economy" mode and shorter in "sport" mode).

Starting from an instant $T_2$ (which is separated from the previous instant $T_1$ by the time interval B), the control unit 16 waits, for a time interval C, for a cut-off phase, or else an idling phase, or else a stabilized-r.p.m. phase to occur for carrying out fuel switching. In other words, starting from the instant $T_2$ and for the time interval C, the control unit 16 carries out fuel switching only if a cut-off phase, or else an idling phase, or else a stabilized-r.p.m. phase occurs. The duration of the time interval C is normally comprised between 2 s and 4 s may vary, for example, as a function of the driving mode chosen by the driver (the time interval C may be longer in "economy" mode and shorter in "sport" mode).

Finally, starting from an instant $T_3$ (which is separated from the previous instant $T_2$ by the time interval C), the control unit 16 carries out without any further delay fuel switching irrespective of whether a cut-off phase, an idling phase, or else a stabilized-r.p.m. phase occurs. In other words, starting from the instant $T_3$ the control unit 16 carries out fuel switching in any case even though no cut-off phase, or idling phase, or stabilized-r.p.m. phase occurs.

According to a preferred embodiment, at the instant $T_1$ the control unit 16, before starting to consider execution of fuel switching, checks that the pressure of the "new" fuel immediately upstream of the corresponding injectors 14 or 15 is adequate (i.e., in the region of the nominal value), i.e., it checks that the supply of the "new" fuel functions correctly (this check is particularly important when the "new" fuel is the gaseous fuel, the supply system of which is more subject to problems; instead, the system for supply of the primary liquid fuel is generally more reliable).

Thanks to the modalities described above, it is possible to ensure at the same time that fuel switching always occurs in the best conditions possible (namely, if possible, during a cut-off phase, during an idling phase, or else during a stabilized-r.p.m. phase) compatibly with the need to carry out fuel switching with a non-excessive delay with respect to the instant in which the driver imparts the command (request) for carrying out fuel switching.

As has been said previously, it would be preferable to carry out fuel switching when the injectors 14 or 15 are not injecting (i.e., are de-activated), in so far as in the absence of injection it is more difficult (if not impossible) to commit errors on the amount of fuel injected. However, it is not always possible to wait for the absence of injection, and in some situations it is necessary to carry out fuel switching when the injectors 14 or 15 are injecting.

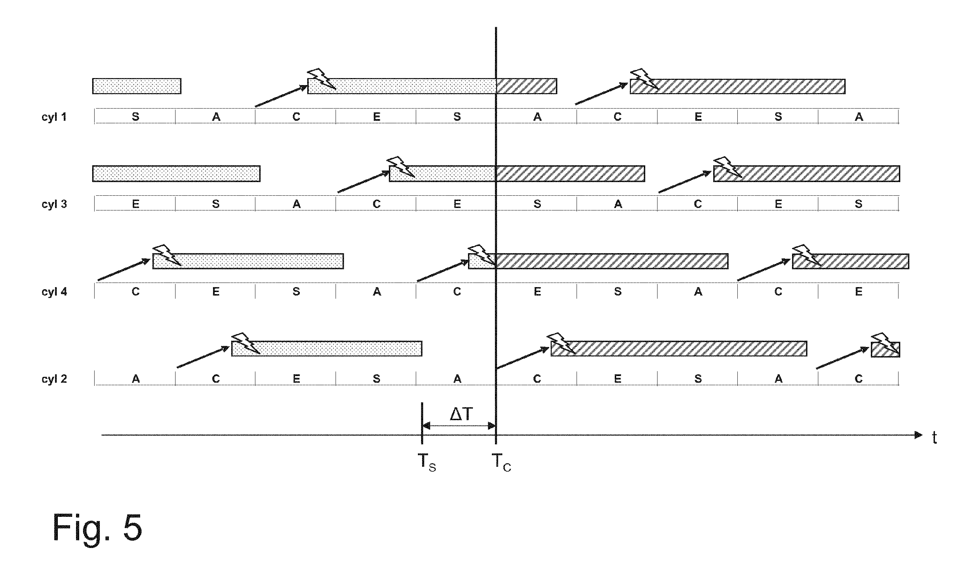

Figure 5 is a schematic illustration of a fuel switch from the liquid fuel to the gaseous fuel that occurs when the injectors 14 are injecting; in particular, Figure 5 illustrates for each cylinder 2 the succession of the strokes (S - Exhaust, A - Intake, C - Compression, E - Expansion), the injection of the corresponding injector 14 (dotted bar) that injects the liquid fuel, the injection of the corresponding injector 15 (hatched bar) that injects the gaseous fuel, and the instant in which ignition sparking occurs (flash). Shown in Figure 5 is an instant $T_s$ in which the electronic unit 16 sends to the switching device 17 a switching command for electrically disconnecting the injectors 14 and hence electrically connecting the injectors 15. In addition, shown in Figure 5 is an instant $T_c$ in which the switching device 17 actually carries out switching (starting from the instant $T_c$ the injectors 14 are all switched off and the injectors 15 are switched on; hence, injection of the liquid fuel terminates, and injection of the gaseous fuel starts). The instant $T_c$ is separated from the instant $T_s$ by a switching time delay $\Delta T$, which is mostly due to the mechanical inertias of the electromechanical relays 18 and 19 of the switching device 17.

During normal control of the internal-combustion engine 1, for each cylinder 2 the control unit 16 determines in a known way an amount $M_{air}$ of air (supporter of combustion) that will be taken in into the cylinder 2 during the subsequent intake cycle. The control unit 16 can vary said amount $M_{air}$ of air taken in by acting on the throttle valve 10 and/or on the control of the intake valves 6 (if present) as a function of an r.p.m. target and/or of a torque target.

Once the amount $M_{air}$ of air taken in has been determined, for each cylinder 2 the control unit 16 determines an amount $M1_{fuel-o}$ of the first fuel to be injected (i.e., the liquid fuel) as a function of the amount $M_{air}$ of supporter of combustion taken in and of the desired air/fuel ratio $\lambda1$ for the first fuel. The desired air/fuel ratio $\lambda1$ for the first fuel is calculated by multiplying a stoichiometric air/fuel ratio $\lambda_{stech}$ (equal to 14.56 for petrol, and between 13.6 and 17.2 for methane, according to the characteristics of the methane) by a corrective coefficient $K_\lambda$ that depends on whether engine control requires a lean combustion ($K_\lambda$ higher than 1), a stoichiometric combustion ($K_\lambda$ higher than 1), or else a rich combustion ($K_\lambda$ lower than 1).

Next, for each cylinder 2 the control unit 16 determines in a known way an injection time $T1_{inj}$ as a function of the amount $M1_{fuel-o}$ of the first fuel to be injected (namely, the injection time $T1_{inj}$ is such that, if the injector 14 is opened for the injection time $T1_{inj}$, then it injects an amount of fuel equal to the amount $M1_{fuel-o}$ of the first fuel to be injected).

Finally, at the pre-set moment and for each cylinder 2 the control unit 16 drives the corresponding injector 14 for activating the corresponding injector 14 for the injection time $T1_{inj}$ (i.e., for keeping the corresponding injector 14 open for a time interval having a duration equal to the injection time $T1_{inj}$).

As illustrated in Figure 5, in some cylinders 2 of the internal-combustion engine 1, while the corresponding injectors 14 are active (i.e., are open and are injecting the first fuel), the control unit 16 carries out fuel switching by disconnecting electrically the injectors 14 from the control unit 16 (which is common for all the injectors 14 and 15) and connecting electrically the injectors 15 to the control unit 16. Hence, at the instant $T_c$ some injectors 14 are off (i.e., closed, de-activated) in so far as they are electrically disconnected from the control unit 16 and, at the same instant, the corresponding injectors 15 are on (i.e., open, activated) in so far as they are electrically connected to the control unit 16.

At the moment of fuel switching (or with a slight advance) the control unit 16 determines for each injector 14 that at the moment of fuel switching is active the amount $M1_{fuel-A}$ of the first fuel that has been actually injected by the injector 14 itself until fuel switching, i.e., up to the instant $T_c$ (said determination is made knowing the time interval $T1_{inj-A}$ during which the injector 14 has remained open up to fuel switching and knowing the characteristic of injection of the injector 14).

Then, the control unit 16 determines for each injector 14 that at the moment of fuel switching is active an amount $M2_{fuel-o}$ of the second fuel to be injected (i.e., of the gaseous fuel) as a function of the amount $M_{air}$ of supporter of combustion taken in, of the amount $M1_{fuel-A}$ of the first fuel that has been actually injected, of the desired air/fuel ratio $\lambda1$ for the first fuel, and of the desired air/fuel ratio $\lambda2$ for the second fuel (determined in the same way as has been described above for the desired air/fuel ratio $\lambda1$ for the first fuel). In particular, the amount $M2_{fuel-o}$ of the second fuel to be injected is determined by applying the following equation:

$$M2_{fuel-O} = \frac{M_{air} - M_{1fuel-A} \cdot \lambda1}{\lambda2}$$

$M2_{fuel-o}$ amount of the second fuel to be injected;
$M_{air}$ amount of supporter of combustion taken in into the cylinder 2 of the internal-combustion engine 1;
$M1_{fuel-A}$ amount of the first fuel that has been actually injected by the injector 14 up to fuel switching;
$\lambda1$ desired air/fuel ratio for the first fuel; and
$\lambda2$ desired air/fuel ratio for the second fuel.

As mentioned previously, the desired air/fuel ratio $\lambda$ for each fuel is calculated by multiplying a stoichiometric air/fuel ratio $\lambda_{stech}$ (equal to 14.56 for petrol, and comprised between 13.6 and 17.2 for methane, according to the characteristics of the methane) by a corrective

coefficient $K_\lambda$ that depends upon whether the engine control requires a lean combustion ($K_\lambda$ higher than 1), a stoichiometric combustion ($K_\lambda$ higher than 1), or else a rich combustion fat ($K_\lambda$ lower than 1).

Next, the control unit 16 determines for each injector 15 that corresponds (i.e., that supplies one and the same cylinder 2) to an injector 14 that at the moment of fuel switching is active an injection time $T2_{inj}$ as a function of the amount $M2_{fuel-o}$ of the second fuel to be injected (i.e., the injection time $T2_{inj}$ is such that, if the injector 15 is opened for the injection time $T2_{inj}$, then it injects an amount of fuel equal to the amount $M2_{fuel}$ of the second fuel to be injected).

Finally, the control unit 16 drives, by means of the electrical connection to the control unit 16, each injector 15 corresponding to an injector 14 that at the moment of fuel switching is active for activating the injector 15 for the injection time $T2_{inj}$ (i.e., for keeping the injector 15 open for a time interval having a duration equal to the injection time $T2_{inj}$).

As mentioned previously, between an instant $T_s$ in which a switching command is sent by the control unit 16 to the switching device 17 and an instant $T_c$ in which the switching device 17 actually carries out switching there elapses a switching time delay $\Delta T$. According to a preferred embodiment, the control unit 16 determines (by means of estimation algorithms or else by reading a value pre-loaded in a memory) the switching time delay $\Delta T$ and then determines for each injector 14 that is active at the moment of switching the amount $M1_{fuel-A}$ of the first fuel that has been actually injected up to fuel switching as a function of the switching time delay $\Delta T$. In other words, the control unit 16 knows the instant $T_s$ in which it sends to the switching device 17 the switching command and estimates the instant $T_c$ at which the switching device 17 actually carries out switching by adding the switching time delay $\Delta T$ to the instant $T_s$. Then, knowing the instant $T_c$ at which the switching device 17 actually carries out switching, the control unit 16 can determine for how long each injector 14 that is active at the moment of switching has remained open and hence can determine precisely the amount $M1_{fuel-A}$ of the first fuel that has actually been injected by the injector 14 itself up to fuel switching.

The amount $M2_{fuel-o}$ of the second fuel to be injected determined by applying the above equation guarantees that the "mixed" combustion of the two fuels (which in some cylinders 2 are injected together and thus burn together) will take place always with the desired air/fuel ratio $\lambda$ (in particular with the corrective coefficient $K_\lambda$ constant irrespective of the fraction of gaseous or liquid fuel considered within the fractioned injection), and hence "mixed" combustion of the two fuels is prevented from causing an undesirable drop/peak of torque and/or an anomalous increase in emission of pollutant elements. In this way, any fuel switch performed in unfavourable conditions (i.e., when at least some injectors 14 are active) in any case occurs in an optimal way, i.e., preventing any discontinuity in the generation of the torque and preventing peaks of emission of pollutant elements.

When the internal-combustion engine 1 is supplied with the gaseous fuel that is injected through the injectors 15, the control unit 16 cyclically measures the pressure $P_{rail}$ of the gaseous fuel in the common channel 22 (i.e., immediately upstream of the injectors 15) by means of the pressure sensor 28, and, as a function of the pressure $P_{rail}$ of the gaseous fuel upstream of the injectors 15, decides, as explained in detail hereinafter, whether and when to carry out of automatic fuel switches (i.e., ones completely independent of the will of the driver) to prevent any irregular operation (i.e., undesirable drops or peaks in torque).

According to a preferred embodiment, the control unit 16 determines a lower-limit threshold $P_{rail-min}$ and an upper-limit threshold $P_{rail-max}$ for the pressure $P_{rail}$ of the gaseous fuel upstream of the injectors 15; then, the control unit 16 cyclically compares the pressure $P_{rail}$ of the gaseous fuel upstream of the injectors 15 with the limit thresholds $P_{rail-min}$ and $P_{rail-max}$ and carries out automatically (i.e., in a way completely independent of the will of the driver) a fuel switch from the gaseous fuel to the liquid fuel when the pressure $P_{rail}$ of the gaseous fuel upstream of the injectors 15 exceeds one of the limit thresholds $P_{rail-min}$ and $P_{rail-max}$ (i.e., it drops below the lower-limit threshold $P_{rail-min}$ or else exceeds the upper-limit threshold $P_{rail-max}$).

Preferably, before comparing the pressure $P_{rail}$ of the gaseous fuel upstream of the injectors 15 with the limit thresholds $P_{rail-min}$ and $P_{rail-max}$, said pressure $P_{rail}$ of the gaseous fuel upstream of the injectors 15 is filtered with a lowpass filter to reduce the rate of variation (i.e., to eliminate sharp jumps that may also be due to errors of reading of the pressure sensor 28) and then the control unit 16 compares the filtered pressure $P_{rail}$ of the gaseous fuel upstream of the injectors 15 with the limit thresholds $P_{rail-min}$ and $P_{rail-max}$. In this way, in the comparison with the limit thresholds $P_{rail-min}$ and $P_{rail-max}$ there is considered only the actual evolution of the pressure $P_{rail}$ of the gaseous fuel upstream of the injectors 15, and not impulsive "irregularities".

The control unit 16 determines a minimum injection time $T_{inj-min}$ as a function of the constructional characteristics of the injectors 15 of the gaseous fuel (preferably the minimum injection time $T_{inj-min}$ is pre-stored in a memory of the control unit 16). In other words, an injector 14 always presents a minimum injection time $T_{inj-min}$ (supplied by the manufacturer of the injector 14) below which it is not advisable to drop (in so far as execution, repeatability, and/or precision of injection are no longer guaranteed).

The control unit 16 cyclically determines the upper-limit threshold $P_{rail-max}$ as a function of the minimum injection time $T_{inj-min}$ and of the current amount of fuel injected (or else, alternatively, of a current amount of intake air, which is linked to the current amount of fuel injected by the desired air/fuel ratio). In other words, the

upper-limit threshold $P_{rail-max}$ is equal to the pressure $P_{rail}$ of the gaseous fuel upstream of the injectors 15 for which, by opening (switching on/activating) an injector 14 for the minimum injection time $T_{inj-min}$, there is injected exactly the current amount of fuel (i.e., below the upper-limit threshold $P_{rail-max}$, to inject the current amount of fuel, it is necessary to open the injector 14 for an injection time longer than the minimum injection time $T_{inj-min}$, whereas above the upper-limit threshold $P_{rail-max}$, to inject the current amount of fuel, it is necessary to open the injector 14 for an injection time shorter than the minimum injection time $T_{inj-min}$). In other words, the upper-limit threshold $P_{rail-max}$ represents the maximum pressure $P_{rail}$ of the gaseous fuel upstream of the injectors 15 beyond which, to inject the current amount of fuel, it would be necessary (but obviously not possible/advisable) to open (switch on/activate) the injector 14 for an injection time shorter than the minimum injection time $T_{inj-min}$.

Moreover, the control unit 16 cyclically determines a maximum injection time $T_{inj-max}$ as a function of the current r.p.m. In other words, injection of the fuel for a given cycle of a cylinder 2 cannot take place at any one moment but must necessarily terminate (with a certain advance) by the end of the intake stroke in the case of indirect injection and (with a certain advance) by the end of the compression stroke in the case of direct injection. Otherwise, if these limits are not respected, part of the fuel injected is not burnt and is discharged unburnt together with the exhaust gases. It may be expedient also to impose a given arbitrary end-of-injection phase (i.e., one that is not necessarily identifiable with the end of an engine stroke) that is to be respected. Hence, on the basis of the current r.p.m. (which determines the time duration of the cycles of the cylinders 2, i.e., how long intake, compression, expansion, and exhaust last) the control unit 16 cyclically determines a maximum injection time $T_{inj-max}$, i.e., how long the maximum interval available for injecting the fuel lasts. It should be noted that in terms of engine degrees (i.e., of angular space swept by the engine shaft 4) the maximum interval available for injecting the fuel is substantially constant, but by varying the speed of rotation of the engine shaft 4 (i.e., by varying the r.p.m.), the maximum time interval available for injecting the fuel increases (lower r.p.m.) or decreases (higher r.p.m.).

The control unit 16 cyclically determines the lower-limit threshold $P_{rail-min}$ as a function of the maximum injection time $T_{inj-max}$ and of the current amount of fuel injected (or else, alternatively, of a current amount of intake air, which is linked to the current amount of fuel injected by the desired air/fuel ratio). In other words, the lower-limit threshold $P_{rail-min}$ is equal to the pressure $P_{rail}$ of the gaseous fuel upstream of the injectors 15 for which, by opening (switching on/activating) an injector 14 for the maximum injection time $T_{inj-max}$, exactly the current amount of fuel is injected (i.e., above the lower-limit threshold $P_{rail-min}$, to inject the current amount of fuel, it is necessary to open the injector 14 for an injection time shorter than the maximum injection time $T_{inj-max}$, whereas below the lower-limit threshold $P_{rail-min}$, to inject the current amount of fuel, it is necessary to open the injector 14 for an injection time longer than the maximum injection time $T_{inj-max}$). In other words, the lower-limit threshold $P_{rail-min}$ represents the minimum pressure $P_{rail}$ of the gaseous fuel upstream of the injectors 15, below which, to inject the current amount of fuel, it would be necessary (but obviously not possible/advisable) to open (switch on/activate) the injector 14 for an injection time longer than the maximum injection time $T_{inj-max}$.

The current amount of fuel injected can be determined in various ways: generally, the current amount of fuel injected is equal to the amount of fuel that must be injected in the next injection, but alternatively the current amount of fuel injected can also be equal to the amount of fuel that has been injected in the last injection, or else can be equal to an average of the amounts of fuel injected during the last 3-10 injections (averaging prevents a single "peak" value from being taken into consideration, but just the trend is considered).

According to a preferred embodiment, the control unit 16 determines the first time derivative of the pressure $P_{rail}$ of the gaseous fuel upstream of the injectors 15 (as has been said previously, preferably the control unit 16 determines the first time derivative of the pressure $P_{rail}$ of the gaseous fuel upstream of the injectors 15 filtered with a lowpass filter) and then determines the limit thresholds $P_{rail-min}$ and $P_{rail-max}$ also as a function of the first time derivative of the pressure $P_{rail}$ of the gaseous fuel upstream of the injectors 15. In particular, the lower-limit threshold $P_{rail-min}$ is increased (i.e., rendered more stringent) when the first time derivative of the pressure $P_{rail}$ of the gaseous fuel upstream of the injectors 15 exceeds a pre-set negative slope (i.e., when the pressure $P_{rail}$ of the gaseous fuel upstream of the injectors 15 decreases very rapidly), and the upper-limit threshold $P_{rail-max}$ is decreased (i.e., rendered more stringent) when the first time derivative of the pressure $P_{rail}$ of the gaseous fuel upstream of the injectors 15 exceeds a pre-set positive slope (i.e., when the pressure $P_{rail}$ of the gaseous fuel upstream of the injectors 15 increases very rapidly). The modification of the limit thresholds $P_{rail-min}$ and $P_{rail-max}$ also as a function of the first time derivative of the pressure $P_{rail}$ of the gaseous fuel upstream of the injectors 15 enables the control unit 16 to act faster when the pressure $P_{rail}$ of the gaseous fuel upstream of the injectors 15 presents a very fast change (i.e., a decrease or else an increase).

According to a preferred embodiment, the control unit 16 waits, after switching the fuel from the gaseous fuel to the liquid fuel, for a waiting time interval WT during which no fuel switch is performed (i.e., liquid fuel continues to be supplied). After the end of the waiting time interval WT, the control unit 16 cyclically verifies whether the pressure $P_{rail}$ of the gaseous fuel upstream of the injectors 15 is still beyond the limit threshold $P_{rail-min}$ or $P_{rail-max}$ that has determined the previous automatic fuel switch (i.e., whether the pressure $P_{rail}$ of the gaseous fuel upstream of the injectors 15 is still lower than the lower-limit threshold $P_{rail-min}$ or else is still higher than the upper-limit threshold $P_{rail-max}$). Hence, the control unit 16 automatically carries out a fuel switch from the liquid fuel to the gaseous fuel if, after the end of the waiting time interval WT, the pressure $P_{rail}$ of the gaseous fuel upstream of the injectors 15 is no longer beyond the limit threshold $P_{rail-min}$ or $P_{rail-max}$ that has determined the previous automatic fuel switch (i.e., if the pressure $P_{rail}$ of the gaseous fuel upstream of the injectors 15 has risen above the lower-limit threshold $P_{rail-min}$ or else has dropped again below the upper-limit threshold $P_{rail-max}$).

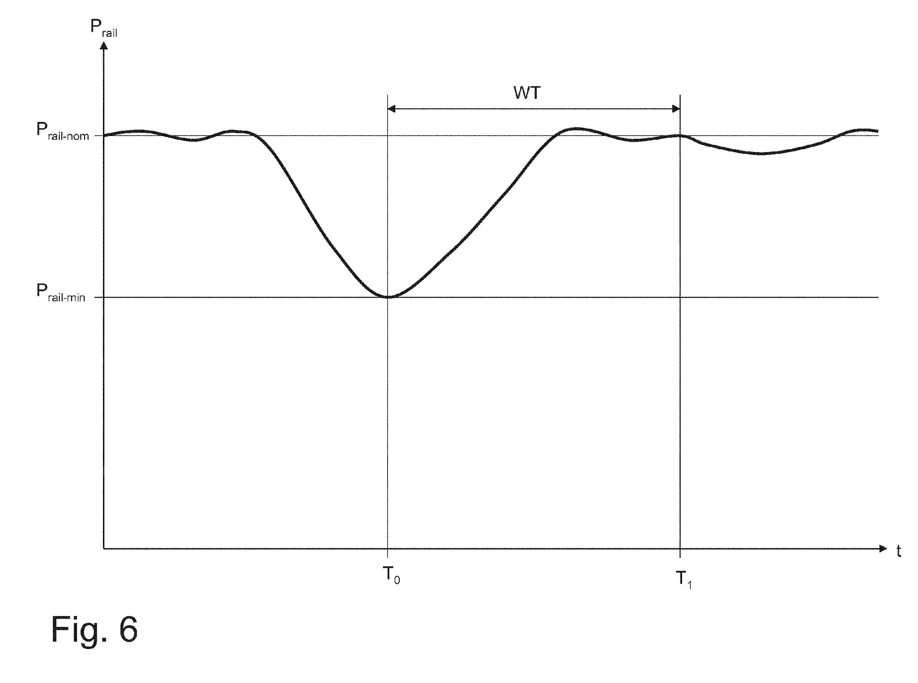

What has been described above is illustrated schematically in Figures 6-8, which show the plot in time of the pressure $P_{rail}$ of the gaseous fuel upstream of the injectors 15 in three different situations.

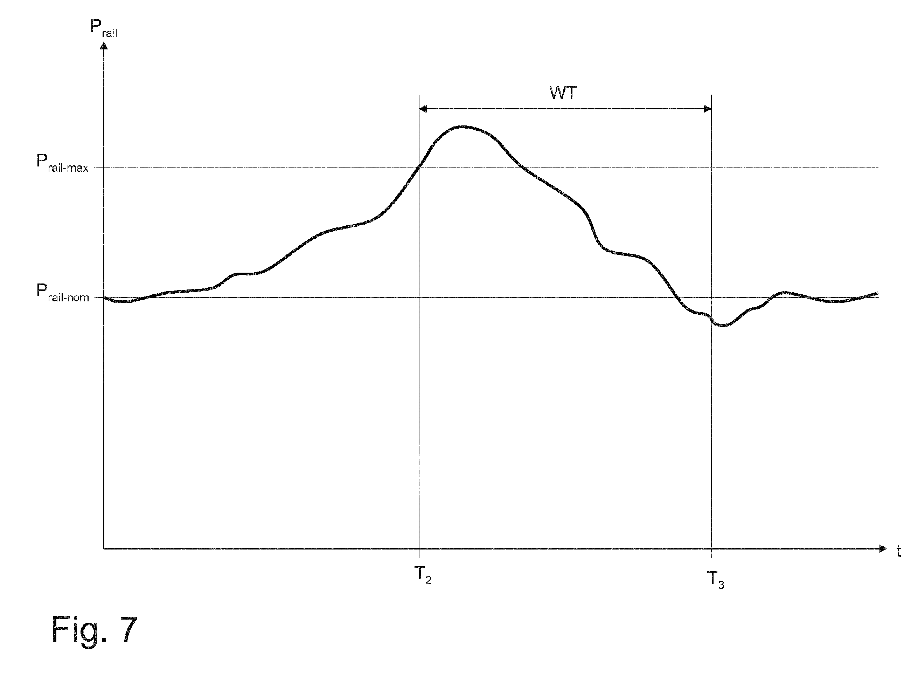

In Figure 6, at the instant $T_0$, the pressure $P_{rail}$ of the gaseous fuel upstream of the injectors 15 drops below the lower-limit threshold $P_{rail-min}$ and hence at the instant $T_0$ the control unit 16 carries out an automatic fuel switch from the gaseous fuel to the liquid fuel. After the instant $T_0$, the pressure $P_{rail}$ of the gaseous fuel upstream of the injectors 15 starts to rise again, and hence at the instant $T_1$ (i.e., after waiting for the waiting time interval WT from the instant To) the control unit 16 carries out a new automatic fuel switch from the liquid fuel to the gaseous fuel in so far as at the end of the waiting time interval WT (i.e., at the instant $T_1$) the pressure $P_{rail}$ of the gaseous fuel upstream of the injectors 15 is higher than the lower-limit threshold $P_{rail-min}$. In Figure 7, at the instant $T_2$, the pressure $P_{rail}$ of the gaseous fuel upstream of the injectors 15 exceeds the upper-limit threshold $P_{rail-max}$, and hence, at the instant $T_2$, the control unit 16 carries out an automatic fuel switch from the gaseous fuel to the liquid fuel. After the instant $T_2$, the pressure $P_{rail}$ of the gaseous fuel upstream of the injectors 15 starts to drop again, and hence, at the instant $T_3$ (i.e., after waiting for the waiting time interval WT from the instant $T_2$), the control unit 16 carries out a new automatic fuel switch from the liquid fuel to the gaseous fuel in so far as at the end of the waiting time interval WT (i.e., at the instant $T_3$) the pressure $P_{rail}$ of the gaseous fuel upstream of the injectors 15 is lower than the upper-limit threshold $P_{rail-max}$.

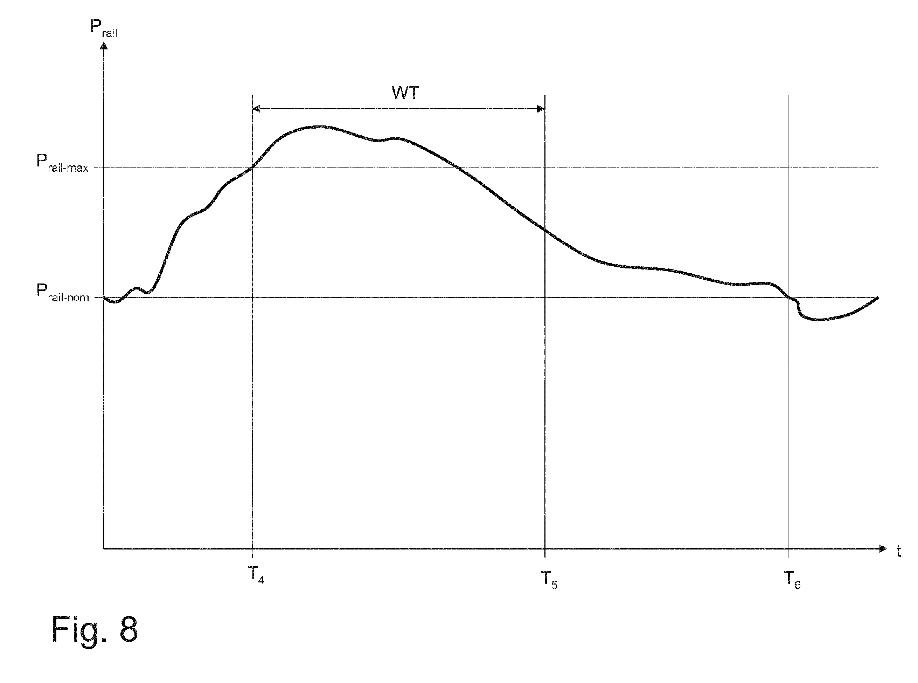

In Figure 8, at the instant $T_4$ the pressure $P_{rail}$ of the gaseous fuel upstream of the injectors 15 exceeds the upper-limit threshold $P_{rail-max}$, and hence at the instant $T_4$ the control unit 16 carries out an automatic fuel switch from the gaseous fuel to the liquid fuel. After the instant $T_4$ the pressure $P_{rail}$ of the gaseous fuel upstream of the injectors 15 starts to drop again but in quite a slow way, and hence at the instant $T_5$ (i.e., after waiting for the waiting time interval WT from the instant $T_4$) the control unit 16 does not carry out a new automatic fuel switch from the liquid fuel to the gaseous fuel in so far as, at the end of the waiting time interval WT (i.e., at the instant $T_5$), the pressure $P_{rail}$ of the gaseous fuel upstream of the injectors 15 is still higher than the upper-limit thresh-

old $P_{rail-max}$. The control unit 16 carries out a new automatic fuel switch from the liquid fuel to the gaseous fuel at the instant $T_6$, in which the pressure $P_{rail}$ of the gaseous fuel upstream of the injectors 15 drops below of the upper-limit threshold $P_{rail-max}$ (hence well beyond the waiting time interval WT from the instant $T_4$ in which automatic fuel switching from the gaseous fuel to the liquid fuel has been performed).

According to a preferred embodiment, after an automatic fuel switch due to the fact that the pressure $P_{rail}$ of the fuel was higher than the upper-limit threshold $P_{rail-max}$, the control unit 16 waits indefinitely (beyond the waiting time interval WT) for the pressure $P_{rail}$ of the fuel to drop back again below the upper-limit threshold $P_{rail-max}$ to carry out the opposite automatic fuel switching from liquid fuel to gaseous fuel. Instead, after an automatic fuel switch due to the fact that the pressure $P_{rail}$ of the fuel was lower than the lower-limit threshold $P_{rail-min}$, the control unit 16 does not wait indefinitely (beyond the waiting time interval WT) for the pressure $P_{rail}$ of the fuel to rise above the lower-limit threshold $P_{rail-min}$ to carry out the opposite automatic fuel switching from liquid fuel to gaseous fuel. Instead, the control unit 16 disables, up to the next turning-off of the internal-combustion engine 1 or else up to the next refuelling with gaseous fuel, fuel switching from the liquid fuel to the gaseous fuel if, at the end of the waiting time interval WT, the pressure $P_{rail}$ of the gaseous fuel upstream of the injectors 15 is still lower than the lower-limit threshold $P_{rail-min}$. Alternatively, the control unit 16 measures a level of the gaseous fuel in the tank 21 and disables, if the pressure $P_{rail}$ of the gaseous fuel upstream of the injectors 15 has dropped below the lower-limit threshold $P_{rail-min}$ and up to the next turning-off of the internal-combustion engine 1 or else up to the next refuelling with gaseous fuel, fuel switching from the liquid fuel to the gaseous fuel as a function of the current hourly consumption of the gaseous fuel and as a function of the level of the gaseous fuel in the tank 21. According to a preferred embodiment, automatic fuel switching from the gaseous fuel to the liquid fuel is performed immediately when the pressure $P_{rail}$ of the gaseous fuel upstream of the injectors 15 passes beyond one of the limit thresholds $P_{rail-min}$ or $P_{rail-max}$ (i.e., irrespective of the state of operation of the internal-combustion engine 1), whilst, to carry out the opposite automatic fuel switching from the liquid fuel to the gaseous fuel, it is necessary to wait for a cut-off phase, an idling phase, or else a stabilized-r.p.m. phase. Alternatively or else in addition, to carry out the opposite automatic fuel switching from the liquid fuel to the gaseous fuel, it is possible to wait for a stabilization of the pressure $P_{rail}$ of the gaseous fuel upstream of the injectors 15 (i.e., the pressure $P_{rail}$ of the gaseous fuel upstream of the injectors 15 must remain approximately constant, i.e., without jumps, for a certain time), in addition to verifying, as is obvious, that the pressure $P_{rail}$ of the gaseous fuel upstream of the injectors 15 is comprised between the lower-limit threshold $P_{rail-min}$ and the upper-limit threshold $P_{rail-max}$.

According to a preferred embodiment, the control unit 16 increases, up to the next turning-off of the internal-combustion engine 1, the lower-limit threshold $P_{rail-min}$ and decreases the upper-limit threshold $P_{rail-max}$ by means of corresponding contributions of hysteresis whenever an automatic fuel switch from the gaseous fuel to the liquid fuel is performed. In particular, the control unit 16 can measure a level of the gaseous fuel in the tank 21 and then can determine the contributions of hysteresis as a function of the level of the gaseous fuel in the tank 21. The function of the contributions of hysteresis is to reduce the number of automatic fuel switches maintaining for a longer time supply of the liquid fuel instead of the gaseous fuel when the pressure $P_{rail}$ of the gaseous fuel upstream of the injectors 15 "oscillates" around a limit threshold $P_{rail-min}$ or $P_{rail-max}$.

The pressure $P_{rail}$ of the gaseous fuel upstream of the injectors 15 drops below the lower-limit threshold $P_{rail-min}$ when the tank 21 of the gaseous fuel is running out. Alternatively, the pressure $P_{rail}$ of the gaseous fuel upstream of the injectors 15 drops below the lower-limit threshold $P_{rail-min}$ when a very fast transient occurs in which the internal-combustion engine 1 rapidly passes from a situation of zero (or very low) torque, in which only a small amount of gaseous fuel is injected, to a situation of maximum (or very high) torque, in which a large amount of gaseous fuel is injected. In this situation, the pressure regulator 25 for the gaseous fuel upstream of the injectors 15 may respond with a certain delay to the variation of the flowrate of the gaseous fuel on account of its mechanical inertias and may hence supply temporarily to the injectors 15 a flow of gaseous fuel that is too low (with a consequent even considerable decrease in the pressure $P_{rail}$ of the gaseous fuel upstream of the injectors 15 as compared to the nominal value).

The pressure $P_{rail}$ of the gaseous fuel upstream of the injectors 15 rises above the upper-limit threshold $P_{rail-max}$ when a very fast transient occurs in which the internal-combustion engine 1 rapidly passes from a situation of maximum (or very high) torque, in which a large amount of gaseous fuel is injected, to a situation of zero (or very low) torque, in which only a small amount of gaseous fuel is injected. In this situation, the pressure regulator 25 for the gaseous fuel upstream of the injectors 15 may respond with a certain delay to the variation of the flowrate of the gaseous fuel on account of its mechanical inertias and hence may supply temporarily to the injectors 15 a flowrate of gaseous fuel that is to high (with a consequent even considerable increase in the pressure $P_{rail}$ of the gaseous fuel upstream of the injectors 15 as compared to the nominal value). Said variations in the pressure $P_{rail}$ of the gaseous fuel upstream of the injectors 15 as compared to the nominal value are likely to bring about errors in injection of the gaseous fuel (i.e., deviations between the amount of gaseous fuel actually injected and the optimal amount of gaseous fuel). Without the automatic fuel switching from the gaseous fuel to the liquid fuel described above, when the pressure

$P_{rail}$ of the gaseous fuel upstream of the injectors 15 passes beyond the limit threshold $P_{rail-min}$ or $P_{rail-max}$ for the reasons described above, there would occur an undesirable irregular operation of the internal-combustion engine 1, during which in the cylinders 2 too little fuel is supplied (creating an undesirable drop in torque) or else too much fuel is supplied (creating a peak in torque that is equally undesirable). Instead, thanks to the automatic fuel switching from the gaseous fuel to the liquid fuel described above, when the pressure $P_{rail}$ of the gaseous fuel upstream of the injectors 15 passes beyond the limit threshold $P_{rail-min}$ or $P_{rail-max}$ for the reasons described above, no irregular operation of the internal-combustion engine 1 occurs.

It should be noted that the method for controlling fuel injection described above is simple and economically advantageous to implement in an electronic control unit for a new-generation internal-combustion engine in so far as it uses measurements supplied by sensors that are normally present in modern internal-combustion engines (and hence does not call for any hardware modifications) and does not require either a high computational power or a high occupation of memory.

**Claims**

1. A method for controlling fuel injection in a multifuel internal-combustion engine (1) that can inject alternatively a liquid fuel and a gaseous fuel; the control method comprises the steps of:

   injecting the gaseous fuel by means of a plurality of injectors (15), which are directly connected to a common channel (22); and
   cyclically measuring the pressure ($P_{rail}$) of the gaseous fuel within the common channel (22); the control method is **characterized in that** it comprises the further steps of:

   determining an upper-limit threshold ($P_{rail-max}$) for the pressure ($P_{rail}$) of the gaseous fuel within the common channel (22); comparing the pressure ($P_{rail}$) of the gaseous fuel within the common channel (22) with the upper-limit threshold ($P_{rail-max}$); and carrying out an automatic fuel switch from the gaseous fuel to the liquid fuel when the pressure ($P_{rail}$) of the gaseous fuel within the common channel (22) is higher than the upper-limit threshold ($P_{rail-max}$).

2. The control method according to Claim 1, and comprising the further steps of:

   filtering the pressure ($P_{rail}$) of the gaseous fuel within the common channel (22) with a lowpass filter; and

comparing the filtered pressure ($P_{rail}$) of the gaseous fuel within the common channel (22) with the upper-limit threshold ($P_{rail-max}$).

3. The control method according to Claim 1 or Claim 2 and comprises the further steps of:

   determining also a lower-limit threshold ($P_{rail-min}$) for the pressure ($P_{rail}$) of the gaseous fuel within the common channel (22);
   comparing the pressure ($P_{rail}$) of the gaseous fuel within the common channel (22) with the lower-limit threshold ($P_{rail-min}$); and
   carrying out an automatic fuel switch from the gaseous fuel to the liquid fuel when the pressure ($P_{rail}$) of the gaseous fuel within the common channel (22) is lower than the lower-limit threshold ($P_{rail-min}$).

4. The control method according to Claim 3, and comprising the further steps of:

   determining a minimum injection time ($T_{inj-min}$) and/or a maximum injection time ($T_{inj-max}$); and
   determining each limit threshold ($P_{rail-min}$; $P_{rail-max}$) as a function of the minimum injection time and/or of the maximum injection time.

5. The control method according to Claim 4, and comprising the further steps of:

   determining the lower-limit threshold ($P_{rail-min}$) as a function of the maximum injection time ($T_{inj-max}$); and/or
   determining the upper-limit threshold ($P_{rail-max}$) as a function of the minimum injection time ($T_{inj-min}$).

6. The control method according to Claim 5, and comprising the further steps of:

   determining the maximum injection time ($T_{inj-max}$) as a function of the current r.p.m.; and/or
   determining the minimum injection time ($T_{inj-min}$) as a function of the characteristics of the injector (14) of the gaseous fuel.

7. The control method according to Claim 6 and comprising the further steps of:

   determining the upper-limit threshold ($P_{rail-max}$) as a function of the minimum injection time ($T_{inj-min}$) and of a current amount of fuel injected or else of a current amount of intake air; and
   determining the lower-limit threshold ($P_{rail-min}$) as a function of the maximum injection time ($T_{inj-max}$) and of a current amount of fuel injected or else of a current amount of intake air.

8. The control method according to any one of Claims 1 to 7, and comprising the further steps of:

   determining the first time derivative of the pressure ($P_{rail}$) of the gaseous fuel within the common channel (22); and
   determining the limit threshold ($P_{rail-min}$; $P_{rail-max}$) also as a function of the first time derivative of the pressure ($P_{rail}$) of the gaseous fuel within the common channel (22).

9. The control method according to any one of Claims 1 to 8, and comprising the further steps of:

   waiting, after switching the fuel from the gaseous fuel to the liquid fuel, for a waiting time interval (WT) during which no switching is made;
   checking whether, after the end of the waiting time interval (WT), the pressure ($P_{rail}$) of the gaseous fuel within the common channel (22) is still beyond the limit threshold ($P_{rail-min}$; $P_{rail-max}$); and
   carrying out an automatic fuel switch from the liquid fuel to the gaseous fuel if, after the end of the waiting time interval (WT), the pressure ($P_{rail}$) of the gaseous fuel within the common channel (22) no longer falls beyond the limit threshold ($P_{rail-min}$; $P_{rail-max}$).

10. The control method according to Claim 9, and comprising the further step of disabling, up to the next turning-off of the internal-combustion engine (1) or else up to the next refuelling with gaseous fuel, fuel switching from the liquid fuel to the gaseous fuel if, at the end of the waiting time interval (WT), the pressure ($P_{rail}$) of the gaseous fuel within the common channel (22) is still lower than a lower-limit threshold ($P_{rail-min}$).

11. The control method according to Claim 9 and comprising the further steps of:

   measuring a level of the gaseous fuel in a tank (21) of the gaseous fuel; and
   disabling, if the pressure ($P_{rail}$) of the gaseous fuel within the common channel (22) has dropped below a lower-limit threshold ($P_{rail-min}$) and up to the next turning-off of the internal-combustion engine (1) or else up to the next refuelling with gaseous fuel, fuel switching from the liquid fuel to the gaseous fuel as a function of the current hourly consumption of the gaseous fuel and as a function of the level of the gaseous fuel in the tank (21) of the gaseous fuel.

**12.** The control method according to Claim 9, Claim 10, or Claim 11, and comprising the further step of waiting for a cut-off phase, an idling phase, or else a stabilized r.p.m. phase for carrying out automatic fuel switching from the liquid fuel to the gaseous fuel.

**13.** The control method according to any one of Claims 1 to 12 and comprising the further step of increasing, up to the next turning-off of the internal-combustion engine (1), a lower-limit threshold ($P_{rail-min}$) and/or decreasing an upper-limit threshold ($P_{rail-max}$) by means of corresponding contributions of hysteresis whenever an automatic fuel switch from the gaseous fuel to the liquid fuel is performed.

**14.** The control method according to Claim 13 and comprising the further steps of:

measuring a level of the gaseous fuel in a tank (21) of the gaseous fuel; and
determining the contributions of hysteresis as a function of the level of the gaseous fuel in the tank (21) of the gaseous fuel.

**Patentansprüche**

**1.** Verfahren zur Steuerung der Kraftstoffeinspritzung in einem Mehrfachbrennstoff-Verbrennungsmotor (1), die alternativ einen flüssigen Kraftstoff und einen gasförmigen Kraftstoff einspritzen kann; das Steuerungsverfahren beinhaltet folgende Schritte:

Einspritzen des gasförmigen Kraftstoffs mittels einer Vielzahl von Einspritzdüsen (15), die direkt mit einer gemeinsamen Leitung (22) verbunden sind; und
zyklisches Messen des Drucks ($P_{rail}$) des gasförmigen Kraftstoffs innerhalb der gemeinsamen Leitung (22);
das Steuerungsverfahren ist **dadurch gekennzeichnet, dass** es folgende weitere Schritte beinhaltet:

Bestimmen eines oberen Grenzwertes ($P_{rail-max}$) für den Druck ($P_{rail}$) des gasförmigen Kraftstoffs innerhalb der gemeinsamen Leitung (22);
Vergleichen des Drucks ($P_{rail}$) des gasförmigen Kraftstoffs innerhalb der gemeinsamen Leitung (22) mit dem oberen Grenzwert ($P_{rail-max}$) ; und
Durchführen einer automatischen Kraftstoffumschaltung vom gasförmigen Kraftstoff auf den flüssigen Kraftstoff, wenn der Druck ($P_{rail}$) des gasförmigen Kraftstoffs innerhalb der gemeinsamen Leitung (22) höher als der obere Grenzwert ($P_{rail-max}$) ist.

**2.** Steuerungsverfahren nach Anspruch 1 und folgende weitere Schritte beinhaltend:

Filtern des Drucks ($P_{rail}$) des gasförmigen Kraftstoffs innerhalb der gemeinsamen Leitung (22) mit einem Tiefpassfilter; und
Vergleichen des gefilterten Drucks ($P_{rail}$) des gasförmigen Kraftstoffs innerhalb der gemeinsamen Leitung (22) mit dem oberen Grenzwert ($P_{rail-max}$).

**3.** Das Steuerungsverfahren nach Anspruch 1 oder Anspruch 2 beinhaltet folgende weitere Schritte:

Bestimmen auch eines unteren Grenzwertes ($P_{rail-min}$) für den Druck ($P_{rail}$) des gasförmigen Kraftstoffs innerhalb der gemeinsamen Leitung (22);
Vergleichen des Drucks ($P_{rail}$) des gasförmigen Kraftstoffs innerhalb der gemeinsamen Leitung (22) mit dem unteren Grenzwert ($P_{rail-min}$); und
Durchführen einer automatischen Kraftstoffumschaltung vom gasförmigen Kraftstoff auf den flüssigen Kraftstoff, wenn der Druck ($P_{rail}$) des gasförmigen Kraftstoffs innerhalb der gemeinsamen Leitung (22) niedriger als der untere Grenzwert ($P_{rail-min}$) ist.

**4.** Steuerungsverfahren nach Anspruch 3 und folgende weitere Schritte beinhaltend:

Bestimmen einer minimalen Einspritzdauer ($T_{inj-min}$) und/oder einer maximalen Einspritzdauer ($T_{inj-max}$); und
Bestimmen des jeweiligen Grenzwertes ($P_{rail-min}$; $P_{rail-max}$) in Abhängigkeit von der minimalen Einspritzdauer und/oder von der maximalen Einspritzdauer.

**5.** Steuerungsverfahren nach Anspruch 4 und folgende weitere Schritte beinhaltend:

Bestimmen des unteren Grenzwertes ($P_{rail-min}$) in Abhängigkeit von der maximalen Einspritzdauer ($T_{inj-max}$) ; und/oder
Bestimmen des oberen Grenzwertes ($P_{rail-max}$) in Abhängigkeit von der minimalen Einspritzdauer ($T_{inj-min}$).

**6.** Steuerungsverfahren nach Anspruch 5 und folgende weitere Schritte beinhaltend:

Bestimmen der maximalen Einspritzdauer ($T_{inj-max}$) in Abhängigkeit von der augenblicklichen Drehzahl; und/oder
Bestimmen der minimalen Einspritzdauer ($T_{inj-min}$) in Abhängigkeit von den Kennwerten der Einspritzdüse (14) des gasförmigen Kraftstoffs.

7. Steuerungsverfahren nach Anspruch 6 und folgende weitere Schritte beinhaltend:

Bestimmen des oberen Grenzwertes ($P_{rail-max}$) in Abhängigkeit von der minimalen Einspritzdauer ($T_{inj-min}$) und von einer augenblicklich eingespritzten Kraftstoffmenge oder sonst von einer augenblicklichen Ansaugluftmenge; und Bestimmen des unteren Grenzwertes ($P_{rail-min}$) in Abhängigkeit von der maximalen Einspritzdauer ($T_{inj-max}$) und von einer augenblicklich eingespritzten Kraftstoffmenge oder sonst von einer augenblicklichen Ansaugluftmenge.

8. Steuerungsverfahren nach einem der Ansprüche 1 bis 7 und folgende weitere Schritte beinhaltend:

Bestimmen der ersten Zeitableitung des Drucks ($P_{rail}$) des gasförmigen Kraftstoffs innerhalb der gemeinsamen Leitung (22); und Bestimmen des Grenzwertes ($P_{rail-min}$; $P_{rail-max}$) auch in Abhängigkeit von der ersten Zeitableitung des Drucks ($P_{rail}$) des gasförmigen Kraftstoffs innerhalb der gemeinsamen Leitung (22).

9. Steuerungsverfahren nach einem der Ansprüche 1 bis 8 und folgende weitere Schritte beinhaltend:

nach dem Umschalten des Kraftstoffs vom gasförmigen Kraftstoff auf den flüssigen Kraftstoff Warten auf ein Wartezeitintervall (WT), während dem keine Umschaltung durchgeführt wird; Überprüfen, ob nach dem Ende des Wartezeitintervalls (WT) der Druck ($P_{rail}$) des gasförmigen Kraftstoffs innerhalb der gemeinsamen Leitung (22) noch immer jenseits des Grenzwertes ($P_{rail-min}$; $P_{rail-max}$) liegt; und Durchführen einer automatischen Kraftstoffumschaltung vom flüssigen Kraftstoff auf den gasförmigen Kraftstoff, falls nach dem Ende des Wartezeitintervalls (WT) der Druck ($P_{rail}$) des gasförmigen Kraftstoffs innerhalb der gemeinsamen Leitung (22) nicht mehr jenseits des Grenzwertes ($P_{rail-min}$; $P_{rail-max}$) fällt.

10. Steuerungsverfahren nach Anspruch 9 und beinhaltend den weiteren Schritt des Unterbindens, bis zur nächsten Abschaltung des Verbrennungsmotors (1) oder sonst bis zum nächsten Auftanken mit gasförmigem Kraftstoff, der Kraftstoffumschaltung vom flüssigen Kraftstoff auf den gasförmigen Kraftstoff, falls am Ende des Wartezeitintervalls (WT) der Druck ($P_{rail}$) des gasförmigen Kraftstoffs innerhalb der gemeinsamen Leitung (22) noch immer niedriger als ein unterer Grenzwert ($P_{rail-min}$) ist.

11. Steuerungsverfahren nach Anspruch 9 und folgende weitere Schritte beinhaltend:

Messen eines Füllstandes des gasförmigen Kraftstoffs in einem Behälter (21) des gasförmigen Kraftstoffs; und falls der Druck ($P_{rail}$) des gasförmigen Kraftstoffs innerhalb der gemeinsamen Leitung (22) unter einen unteren Grenzwert ($P_{rail-min}$) gesunken ist und bis zur nächsten Abschaltung des Verbrennungsmotors (1) oder sonst bis zum nächsten Auftanken mit gasförmigem Kraftstoff, Unterbinden der Kraftstoffumschaltung vom flüssigen Kraftstoff auf den gasförmigen Kraftstoff in Abhängigkeit vom augenblicklichen stündlichen Verbrauch des gasförmigen Kraftstoffs und in Abhängigkeit vom Füllstand des gasförmigen Kraftstoffs im Behälter (21) des gasförmigen Kraftstoffs.

12. Steuerungsverfahren nach Anspruch 9, Anspruch 10 oder Anspruch 11 und beinhaltend den weiteren Schritt des Wartens auf eine Absteuerphase, eine Leerlaufphase oder sonst eine Phase mit stabilisierter Drehzahl zum Durchführen einer automatischen Kraftstoffumschaltung vom flüssigen Kraftstoff auf den gasförmigen Kraftstoff.

13. Steuerungsverfahren nach einem der Ansprüche 1 bis 12 und beinhaltend den weiteren Schritt des Anhebens, bis zur nächsten Abschaltung des Verbrennungsmotors (1), eines unteren Grenzwertes ($P_{rail-min}$) und/oder des Absenkens eines oberen Grenzwertes ($P_{rail-max}$) mittels entsprechender Hysteresebeiträge immer dann, wenn eine automatische Kraftstoffumschaltung vom gasförmigen Kraftstoff auf den flüssigen Kraftstoff durchgeführt wird.

14. Steuerungsverfahren nach Anspruch 13 und folgende weitere Schritte beinhaltend:

Messen eines Füllstandes des gasförmigen Kraftstoffs in einem Behälter (21) des gasförmigen Kraftstoffs; und Bestimmen der Hysteresebeiträge in Abhängigkeit vom Füllstand des gasförmigen Kraftstoffs im Behälter (21) des gasförmigen Kraftstoffs.

**Revendications**

1. Procédé de commande d'une injection de carburant dans un moteur à combustion interne polycarburant (1) pouvant injecter alternativement un carburant liquide et un carburant gazeux ; le procédé de commande comprenant les étapes suivantes :

injecter le carburant gazeux à l'aide d'une pluralité d'injecteurs (15) qui sont directement reliés à un canal commun (22) ; et
mesurer cycliquement la pression ($P_{rail}$) du carburant gazeux dans le canal commun (22) ;
le procédé de commande étant **caractérisé en ce qu'**il comprend les étapes supplémentaires suivantes :

déterminer un seuil de limite supérieure ($P_{rail-max}$) pour la pression ($P_{rail}$) du carburant gazeux dans le canal commun (22) ;
comparer la pression ($P_{rail}$) du carburant gazeux dans le canal commun (22) avec le seuil de limite supérieure ($P_{rail-max}$) ; et
exécuter une commutation automatique de carburant du carburant gazeux au carburant liquide lorsque la pression ($P_{rail}$) du carburant gazeux dans le canal commun (22) est supérieure au seuil de limite supérieure ($P_{rail-max}$).

2. Procédé de commande selon la revendication 1, comprenant les étapes supplémentaires suivantes :

filtrer la pression ($P_{rail}$) du carburant gazeux dans le canal commun (22) au moyen d'un filtre passe-bas ; et
comparer la pression ($P_{rail}$) filtrée du carburant gazeux dans le canal commun (22) avec le seuil de limite supérieure ($P_{rail-max}$).

3. Procédé de commande selon la revendication 1 ou 2, comprenant les étapes supplémentaires suivantes :

déterminer également un seuil de limite inférieure ($P_{rail-min}$) pour la pression ($P_{rail}$) du carburant gazeux dans le canal commun (22) ;
comparer la pression ($P_{rail}$) du carburant gazeux dans le canal commun (22) avec le seuil de limite inférieure ($P_{rail-min}$), et
exécuter une commutation automatique de carburant du carburant gazeux au carburant liquide lorsque la pression ($P_{rail}$) du carburant gazeux dans le canal commun (22) est inférieure au seuil de limite inférieure ($P_{rail-min}$).

4. Procédé de commande selon la revendication 3, comprenant les étapes supplémentaires suivantes :

déterminer un temps d'injection minimum ($T_{inj-min}$) et/ou un temps d'injection maximum ($T_{inj-max}$) ; et
déterminer chaque seuil de limite ($P_{rail-min}$; $P_{rail-max}$) en fonction du temps d'injection minimum et/ou du temps d'injection maximum.

5. Procédé de commande selon la revendication 4, et comprenant les étapes supplémentaires suivantes :

déterminer le seuil de limite inférieure ($P_{rail-min}$) en fonction du temps d'injection maximum ($T_{inj-max}$); et/ou
déterminer le seuil de limite supérieure ($P_{rail-max}$) en fonction du temps d'injection minimum ($T_{inj-min}$).

6. Procédé de commande selon la revendication 5, comprenant les étapes supplémentaires suivantes :

déterminer le temps d'injection maximum ($T_{inj-max}$) en fonction du nombre actuel de tours par minute ; et/ou
déterminer le temps d'injection minimum ($T_{inj-min}$) en fonction des caractéristiques de l'injecteur (14) du carburant gazeux.

7. Procédé de commande selon la revendication 6, comprenant les étapes supplémentaires suivantes :

déterminer le seuil de limite supérieure ($P_{rail-max}$) en fonction du temps d'injection ($T_{inj-min}$) minimum et d'une quantité actuelle de carburant injectée ou bien d'une quantité actuelle d'air admis ; et
déterminer le seuil de limite inférieure ($P_{rail-min}$) en fonction du temps d'injection maximum ($T_{inj-max}$) et d'une quantité actuelle de carburant injectée ou bien d'une quantité actuelle d'air admis.

8. Procédé de commande selon l'une quelconque des revendications 1 à 7, comprenant les étapes supplémentaires suivantes :

déterminer la première dérivée temporelle de la pression ($P_{rail}$) du carburant gazeux dans le canal commun (22) ; et
déterminer le seuil de limite ($P_{rail-min}$ ; $P_{rail-max}$) également en fonction de la première dérivée temporelle de la pression ($P_{rail}$) du carburant gazeux dans le canal commun (22).

9. Procédé de commande selon l'une quelconque des revendications 1 à 8, comprenant les étapes supplémentaires suivantes :

attendre, après la commutation de carburant du carburant gazeux au carburant liquide, un intervalle de temps d'attente (WT) durant lequel n'est opérée aucune commutation ;
vérifier si, après la fin de l'intervalle de temps d'attente (WT), la pression ($P_{rail}$) du carburant gazeux dans le canal commun (22) se situe encore au-delà du seuil de limite ($P_{rail-min}$ ; $P_{rail-max}$); et

exécuter une commutation automatique de carburant du carburant liquide au carburant gazeux si, après la fin de l'intervalle de temps d'attente (WT), la pression ($P_{rail}$) du carburant gazeux dans le canal commun (22) ne dépasse plus le seuil de limite ($P_{rail-min}$ ; $P_{rail-max}$).

10. Procédé de commande selon la revendication 9, comprenant l'étape supplémentaire consistant à désactiver, jusqu'au prochain arrêt du moteur à combustion interne (1) ou bien jusqu'au prochain ravitaillement en carburant gazeux, la commutation de carburant du carburant liquide au carburant gazeux si, à la fin de l'intervalle de temps d'attente (WT), la pression ($P_{rail}$) du carburant gazeux dans le canal commun (22) est encore inférieure à un seuil de limite inférieure ($P_{rail-min}$).

11. Procédé de commande selon la revendication 9, comprenant les étapes supplémentaires suivantes :

mesurer un niveau du carburant gazeux dans un réservoir (21) de carburant gazeux ; et désactiver, si la pression ($P_{rail}$) du carburant gazeux dans le canal commun (22) est tombée en-dessous d'un seuil de limite inférieure ($P_{rail-min}$) et jusqu'au prochain arrêt du moteur à combustion interne (1) ou bien jusqu'au prochain ravitaillement en carburant gazeux, la commutation de carburant du carburant liquide au carburant gazeux en fonction de la consommation horaire actuelle du carburant gazeux et en fonction du niveau de carburant gazeux dans le réservoir (21) de carburant gazeux.

12. Procédé de commande selon la revendication 9, 10 ou 11, comprenant l'étape supplémentaire consistant à attendre une phase de coupure, une phase de ralenti ou bien une phase de nombre de tours par minute stabilisée pour exécuter une commutation automatique de carburant du carburant liquide au carburant gazeux.

13. Procédé de commande selon l'une quelconque des revendications 1 à 12, comprenant l'étape supplémentaire consistant à augmenter, jusqu'au prochain arrêt du moteur à combustion interne (1), un seuil de limite inférieure ($P_{rail-min}$) et/ou à diminuer un seuil de limite supérieure ($P_{rail-max}$) à l'aide de contributions correspondantes de l'hystérésis chaque fois qu'une commutation automatique de carburant du carburant gazeux au carburant liquide est opérée.

14. Procédé de commande selon la revendication 13, comprenant les étapes supplémentaires suivantes :

mesurer un niveau de carburant gazeux dans un réservoir (21) de carburant gazeux ; et

déterminer les contributions de l'hystérésis en fonction du niveau de carburant gazeux dans le réservoir (21) de carburant gazeux.

Fig. 1

Fig. 2

Fig. 3

Fig. 4

Fig. 5

Fig. 6

Fig. 7

Fig. 8

EP 2 527 624 B1

**REFERENCES CITED IN THE DESCRIPTION**

**Patent documents cited in the description**

- JP 2002038986 A
- WO 2010006356 A1
- US 2009070008 A